# EUROPEAN PATENT APPLICATION

(11) **EP 2 995 630 A1**
(43) Date of publication of application: **16.03.2016**
(21) Application number: 14184047.0
(22) Date of filing: 09.09.2014
(51) Int. Cl.: C08F 8/48, C08F 8/30, C08F 14/06, G01N 27/333, B01D 71/82, C08F 114/06, C08F 8/26, C09D 127/22, C07D 233/58, C07D 295/037

(54) **Hybrid compounds formed from ionic liquids and uses thereof in ion selective electrodes**

(71) Applicant: Dublin Institute of Technology, Dublin 6 (IE); Keele University, Keele, Staffordshire ST5 5BG (GB)
(72) Inventor: Schazmann, Benjamin, Galway, Co. Galway (IE); Radu, Aleksander, Keele, Staffordshire ST55BG (GB)
(74) Representative: Purdy, Hugh Barry

(57) **Abstract**

A hybrid compound is provided that is formed by reaction between (a) an imidazolium-based ionic liquid functionalised with an alkyne group and (b) a polymer backbone comprising a plurality of azide functional groups, via an azide-alkyne cycloaddition reaction. The hybrid compound comprises a synthetic polymer backbone comprising at least one functional group X of general formula (I): 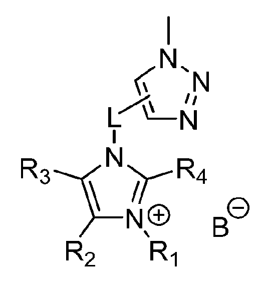 in which:
R₁ to R₄ are each, independently, any chemical group, selected from H, halogen, a substituted or unsubstituted, branched or unbranched alkyl, alkenyl, cycloalkyl, aryl, acyl, heteroaryl, arylalkyl, heteroarylalkyl, aryloxy, alkyloxy, arylalkyloxy, aromatic polycycles, non-aromatic polycycles, mixed aryl and non-aryl polycycles, polyheteroaryl, non-aromatic polyheterocycles, mixed aryl and non-aryl polyheterocycles, and a pyridine group; L is a linker; and B^{⊝} is an anion. An ion selective electrode (ISE) sensor of the type comprising an ion selective electrode and a reference electrode is also provided, wherein the ion selective electrode comprises a coating comprising a hybrid compound of the invention.

## Description

### Introduction

The invention relates to hybrid compounds formed from ionic liquids and uses thereof in ion selective electrodes.

Conventional ISEs with an internal filling solution have an inherent detection limit of about 10⁻⁶ M for the primary ion (main analyte) at best. This is due to the necessary presence of primary ions in the filling solution of the ISE which diffuse out to the membrane-sample (ion flux) interface thus creating a small but significant 'artificial' concentration of analyte in the sample masking actual analyte concentration in the sample below about 10⁻⁶ M. The purpose of the filling solution in conventional ISEs is to allow ionic to electronic communication between the solid contact (often a Ag/AgCl wire which conducts electrons) and the membrane (which conducts ions). So for Ag/AgCl based ISEs the chloride ion must be present in the filling solution to facilitate the above connectivity. Attempts to eliminate the filling solution have often resulted in a thermodynamically ill defined communication mechanism which manifests itself via unstable and unreliable observed voltages (poor analytical signal). Most attempts at creating Coated Wire Electrodes (CWE) or similar 'solid state' formats, where a membrane is coated directly onto a solid contact with no filling solution, seem to ignore this required Ag-AgCl-Cl⁻_{(aq)}-membrane communication chain in that carbon, platinum or gold is used as the solid contact and no discernible ionic-electronic communication is present in theory at least. Other attempts have been made to eliminate the filling solution by using gels or conducting polymers for example, again to allow miniaturisation, improve detection limits etc. A common problem in these cases is that although in theory there is no water between the solid contact (e.g. Ag/AgCl wire and inner membrane surface), small water layers do form allowing certain movements of ions (interferants and primary ions) through the membrane between the aqueous sample and the unwanted water layer i.e. there is a driving force for diffusion. This manifests itself as signal drift (observed voltage drifts up or down) which in turn leads to poor analytical results.

Most ISE protocols demand that ISEs are stored and conditioned in solutions containing primary (target) ions prior to use in real analysis. This is necessary to obtain stable signal readouts and reduce drift during calibration and analysis. This has implications for storage and packaging of ISEs in addition to more time and steps required before an actual analysis can be performed.

One price normally paid for avoiding contact with primary ions prior to analysis (see above point) is that calibration curves show unwanted slopes at lower concentrations (referred to as super-Nernstian response) which impacts on the useable linear range or calibration curve generated. This is due to the movement of ionophore or ion carrier (agent that selectively complexes target ions) within the ISE membrane during exposure to primary ions.

The ISE membrane cocktail of polymer type normally contain polymer (commonly PVC), plasticizer, ion exchange salt and ionophore (ion carrier or complexing agent). In short, the polymer provides the matrix or physical support for the membrane and represents a hydrophobic (waterproof!) layer of relatively high resistance, all requirements for a working ISE. The plasticizer gives the membrane flexibility and reduces the resistance to ionic conductivity/movement, the latter essential for a stable signal (steady voltage readout). The ion exchange salt allows ions of the correct charge sign to enter the membrane phase - a phase that is largely hydrophobic/non-polar. The ionophore provides selective interaction with the target analyte ion (primary ion) so the desired ion can be analysed and the effect of interfering ions present is reduced. The above components are typically mixed into a 'cocktail' with THF as the solvent. As they are mixed they can leach out of the cast membranes over time, limiting the lifetime of the sensor. Futhermore, the components are subject to chemical degradation, again impacting on the lifetime of the sensor.

It is an object of the invention to overcome at least one of the above-referenced problems.

### Statements of Invention

The invention relates to a hybrid compound formed by reaction between (a) an imidazolium-based ionic liquid functionalised with an alkyne group and (b) a polymer backbone comprising azide functional groups, via an azide-alkyne cycloaddition reaction. The hybrid compound finds utility in electrochemical anion detection, particularly as a membrane in an ion selective electrode, and solves one or more of the technical problems described above, including:
- *improved detection limit* (because there is no inner filling solution in our ISE assemblies using hybrid material, this problem is overcome. The proof of this is the detection limit of 10⁻⁷ M for perchlorate observed and shown in the invention disclosure);
- *stable signal* (data presented herein indicates that no water layer forms and the signal is stable using hybrid material based membranes coated directly onto Ag/AgCl wire);
- *conditioning* (ISEs according to the invention do not require conditioning and can be used from the package/dry. This simplifies how such ISEs are packaged and handled/used. Additionally, it is known that where possible, if exposure to primary ions is avoided prior to analysis, lower limits of detection can sometimes be achieved);
- *correct linear calibration curves* (The imidazolium units in the hybrid compounds of the present invention also act as ionophores, whereby the positive imidazolium charge binds anions in solutions. Critically, as the ionophore is chemically attached to the PVC backbone in the hybrid compounds of the present invention, the above mentioned ionophore movement is thereby inhibited. Evidence for this is that an undesired super-Nernstian slope at low concentrations (around 10⁻⁷ M) of perchlorate (ClO₄⁻) is not observed. The results is a wider useable linear calibration and response range for our ISEs); and
- ISE membrane (the hybrid compound of the present invention represents a 2-in-1 approach in that the imidazolium units act as ion exchanger and as ionophore (for iodide and perchlorate for example). This simplified format reduces the potential for degradation. Furthermore as they are chemically attached to a polymer backbone, leaching is reduced. No separate exchanger or ionophore was required. The simplified cocktail means a cheaper, simpler, more robust and longer lasting solution to ISE fabrication).

In a first aspect, the invention provides a hybrid compound formed by reaction between (a) an imidazolium-based ionic liquid functionalised with an alkyne group and (b) a polymer backbone comprising azide functional groups, via an azide-alkyne cycloaddition reaction.

The invention also relates to a hybrid compound comprising a synthetic polymer backbone comprising at least one functional group X of general formula (I): 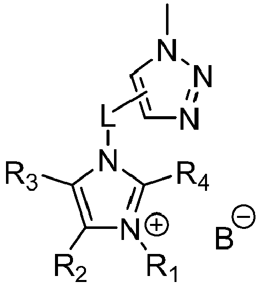 in which:
R₁ to R₄ are each, independently, any chemical group, selected from H, halogen, a substituted or unsubstituted, branched or unbranched alkyl, alkenyl, cycloalkyl, aryl, acyl, heteroaryl, arylalkyl, heteroarylalkyl, aryloxy, alkyloxy, arylalkyloxy, aromatic polycycles, non-aromatic polycycles, mixed aryl and non-aryl polycycles, polyheteroaryl, non-aromatic polyheterocycles, mixed aryl and non-aryl polyheterocycles, and a pyridine group
n is a number greater than 10;
L is a linker; and
B is an anion.

It will be appreciated that the polymer backbone may contain varying amounts of the functional group X. For example, when the hybrid compound is formed from polyvinyl azide, and 100% loading of the functional group is achieved, then every second carbon in the synthetic polymer backbone will be functionalised with a functional group X. In such cases, the hybrid compound of the invention typically has the general formula (II): 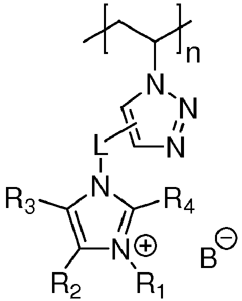 in which R₁ to R₄, L and B are as defined above, n is a number greater than 1. However, if less than 100% loading is achieved, then the hybrid compound will be functionalised with a mixture of azide groups and the functional group X, in which case the hybrid compound of the invention suitably has the general formula (III) below: 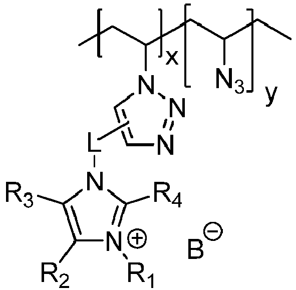 in which R₁ to R₄, L and B are as defined above, x and y are each, independently a number greater than 1.

Likewise, if the polyvinyl azide comprises a mixture of azide and unreacted chloride groups, then the hybrid compound may be functionalised with a mixture of azide groups and the functional group X, as shown in general formula (IV) below, or the hybrid compound may be functionalised with a mixture of azide groups and the functional group X, as shown in general formula (IV) below 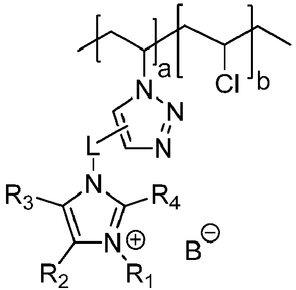 in which R₁ to R₄, L and B are as defined above, and a and b are each, independently, a number greater than 1,
or the hybrid compound may be functionalised with a mixture of azide groups and the functional group X, as shown in general formula (V) below: 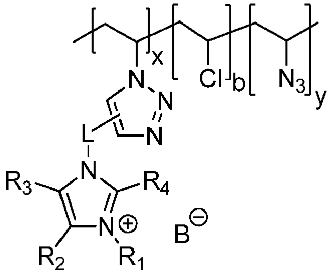 in which R₁ to R₄, L and B are as defined above, and x, b, and y are each, independently, a number greater than 1,

The invention also provides a method for making a hybrid compound according to the invention, comprising the steps of reacting an ionic liquid of general formula (VII): 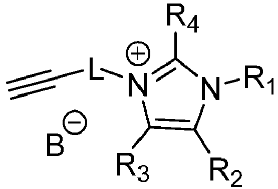 with an azidated polymer in a copper catalysed azide-alkyne cycloaddition reaction, and in which R₁ to R₄, L and B are as defined above.

Preferably, the copper catalysed azide-alkyne cycloaddition reaction is an azide-alkyne Huisgen cycloaddition reaction.

Typically, the azidated polymer has a general formula selected from: 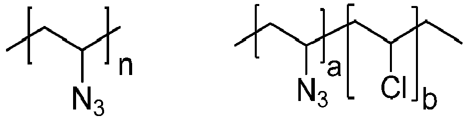 in which n, a and b are each, independently, are at least 1.

An example of one embodiment of the methodology of this invention, in which the polymer is azidated PVC, is shown below:

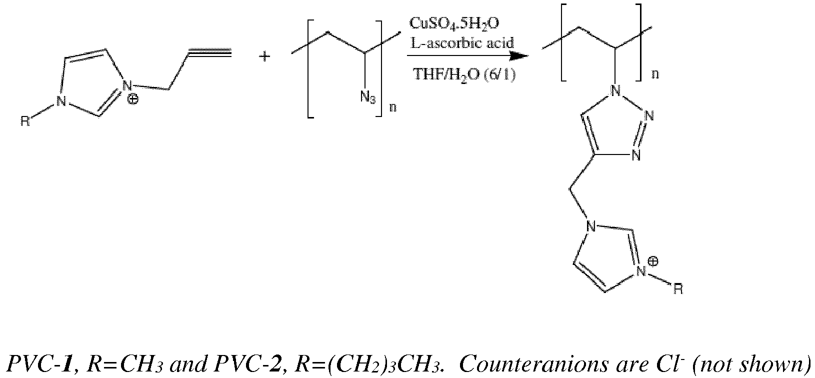

Typically, the ionic liquid of general formula (VII) is formed by reaction between a compound of general formula (VIII) 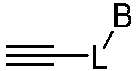 with a compound of general formula (IX) 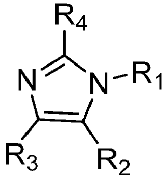 in which R₁ to R₄, L and B are as defined above.

Typically, the reagents (IV) and (V) acts as sole solvents for the reaction, and no addition solvents are required.

Suitably, the reaction temperature ranges between 0 and 70°C.

An example of one embodiment of this reaction is shown below, in which :

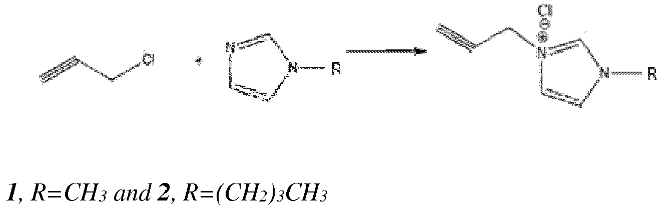

The invention also provides an ionic liquid having the general formula (II): 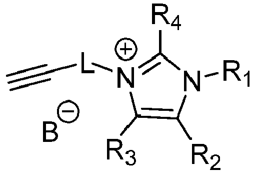 in which R₁ to R₄ and L are as defined above, and in which B is a chloride anion.

Preferably, R₁ is a C₁-C₁₂ alkyl, ideally a butyl group.

Suitably, R₂ to R₄ are H.

In the compounds and processes of the invention, R₁ to R₄ are typically selected from H, halogen, or an alkyl group. Typically, R₂ to R₄ are H, and R₁ is an alkyl group, ideally a lower alkyl group.

In a further aspect, the invention provides an ion selective electrode (ISE) sensor of the type comprising an ion selective electrode and a reference electrode, wherein the ion selective electrode comprises a hybrid compound according to the invention typically coated onto (all or a part of) a surface of the electrode. Suitably, the ISE sensor is configured for detection of iodide (for example, iodide in urine) or perchlorate (for example perchlorate in water). The invention also provides an ISE comprising a solid electrode and a hybrid compound of the invention coated onto all or a portion of the solid electrode.

### Brief Description of the Figures

**Figure 1****.** Example of a fabricated ISE combining a disposable pipette tip with copper wire and Ag/AgCl wire at the tip. :
**Figure 2****.** Coating of the fabricated ISE with the PVC-IL hybrid material.
**Figure 3****.** Reaction scheme of alkylimidazole with propargyl chloride. **1,** R=CH₃ and **2,** R=(CH₂)₃CH₃.
**Figure 4.** 1,3-cycloaddition reaction used to link ionic liquids **1** and **2** to PVC-azide. PVC**-1,** R=CH₃ and PVC-**2**, R=(CH₂)₃CH₃. Counteranions are Cl⁻ (not shown).
**Figure 5****.** The response of ISEs based on a) PVC-1 and b) PVC-**2** to a series of anions. Potential (mV) is plotted against log a. :

### Detailed Description of the Invention

"Hybrid compound" should be understood to mean a compound having imidazolium moieties containing alkyne functional groups linked to a polymer backbone containing azide functional groups, preferably PVC, via an azide-alkyne cycloaddition reaction.

"Ionic liquid" means a salt that has a melting point at less than 100°C at atmospheric pressure.

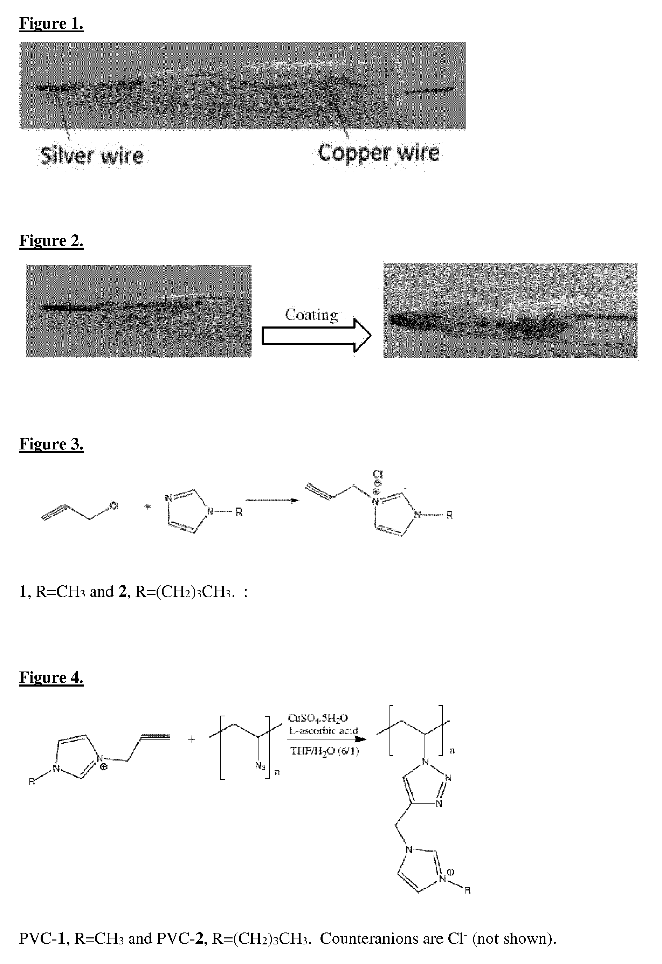

"Imidazolium based ionic liquid" means an ionic liquid that incorporates an imidazolium ring structure, for example the compound shown in Fig. 3 and the compounds described in US Patent Application No: US2009/0143597.

"Anion" means an atom or radical having a negative charge that is capable of combining with the cation part of the ionic compound to provide a salt having a melting point of less than 100°C at atmospheric pressure. Examples of anions are halides (i.e. chloride, bromide, fluoride, iodide), and BF₄⁻, PF₆⁻, CH₃COO⁻, AlCl₄⁻, SCN⁻³, sulfonates.

"Linker" should be understood to mean an aliphatic or aromatic spacer group. Preferably, the linker is straight chain or branched alkyl group, for example (CH₂)n in which n is for example 1-20 preferably 1-5.

"Lower alkyl" means an alkyl group, as defined below, but having from one to ten carbons, more preferably from one to six carbon atoms (eg. "C - C - alkyl") in its backbone structure. "Alkyl" refers to a group containing from 1 to 8 carbon atoms and may be straight chained or branched. An alkyl group is an optionally substituted straight, branched or cyclic saturated hydrocarbon group. When substituted, alkyl groups may be substituted with up to four substituent groups, at any available point of attachment. When the alkyl group is said to be substituted with an alkyl group, this is used interchangeably with "branched alkyl group". Exemplary unsubstituted such groups include methyl, ethyl, propyl, isopropyl, a-butyl, isobutyl, pentyl, hexyl, isohexyl, 4, 4-dimethylpentyl, octyl, 2,2,4-trimethylpentyl, nonyl, decyl, undecyl, dodecyl, and the like. Examplary substituents may include but are not limited to one or more of the following groups: halo (such as F, CI, Br, I), Haloalkyl (such as CCl₃ or CF₃), alkoxy, alkylthio, hydroxyl, carboxy (-COOH), alkyloxycarbonyl (-C(O)R), alkylcarbonyloxy (-OCOR), amino (-NH2), carbamoyl (-NHCOOR-or-OCONHR), urea (-NHCONHR-) or thiol (-SH). Alkyl groups as defined may also comprise one or more carbon double bonds or one or more carbon to carbon triple bonds.

"Lower alkoxy" refers to O-alkyl groups, wherein alkyl is as defined hereinabove. The alkoxy group is bonded to the core compound through the oxygen bridge. The alkoxy group may be straight-chained or branched; although the straight-chain is preferred. Examples include methoxy, ethyloxy, propoxy, butyloxy, t-butyloxy, i-propoxy, and the like. Preferred alkoxy groups contain 1-4 carbon atoms, especially preferred alkoxy groups contain 1-3 carbon atoms. The most preferred alkoxy group is methoxy.

The terms "alkyl", "cycloalkyl", "heterocycloalkyl", "cycloalkylalkyl", "aryl", "acyl", "aromatic polycycle", "heteroaryl", "arylalkyl", "heteroarylalkyl", "amino acyl", "non-aromatic polycycle", "mixed aryl and non-aryl polycycle", "polyheteroaryl", "non-aromatic polyheterocyclic", "mixed aryl and non-aryl polyheterocycles", "amino", and "sulphonyl" are defined in US6,552,065, Column 4, line 52 to Column 7, line 39.

"Azidated polymer" or "polymer backbone comprising azide functional groups" should be understood to mean an azide-functionalised synthetic polymer, such as azidated PVC (anal. Chem. 2010, 82, 6887-6894 pawlak et al.). Other examples of azidated polymers include azide functionalised poly(3,4-ethylenedioxythiophene) (PEDOT) (Macromolecules, 2008, 41, 4321-Daugaard et al.). It will be appreciated that the azidated polymer may comprise varying degree of azide loading. For example, when the azidated polymer is formed from PVC, the resultant polyvinyl azide may be fully functionalised with azide groups (in which every second carbon is functionalised with an azide group), or partially functionalised with azide groups in which the polymer backbone carries both azide and chloride functional groups.

"azide-alkyne cycloaddition reaction" refers to the 1,3-dipolar cycloaddition between an azide and a terminal or internal alkyne to give triazoles and includes the copper(I) catalysed variant. The reaction is described by Sharpless et al. (Angew. Chem. Int. Ed. 2002, 41, No. 14, 2596-2599)

"Ion selective electrode" or "ISE" refers to a transducer or sensor that converts the activity of a specific ion dissolved in a solution into an electrical potential, which can be measured by a voltmeter or pH meter. The electrode generally comprises an ion specific-membrane and a reference electrode. The hybrid material of the invention may be employed as ISE's for example Ion Exchange Resin Membranes, or they may be employed to coat other types of ISE's, for example glass or crystalline membranes.

The hybrid compound of the invention is suitable for use with ion selective electrodes, particularly as a coating on ion selective electrodes for sensing anions, especially iodide and perchlorate anions. Other uses of the hybrid compounds of the invention include drug delivery, where the R1 group of the hybrid compound could be modified to incorporate a stimulus-responsive switchable moiety capable of binding and releasing chemical compounds such as drugs, and in which the stimulus could be polarity, dielectric constant, or another property of the material.

### Experimental

### Reagents, materials and equipment

1-methyl imidazole, 1-butyl imidazole, propargyl chloride, high molecular weight poly (vinyl chloride) (PVC), sodium azide, ascorbic acid, copper sulphate pentahydrate, 2-nitrophenyl octyl ether (NPOE), sodium hypochlorite, methanol, dimethylformamide (DMF) and anhydrous tetrahydrofuran (THF) were supplied by Sigma Aldrich. Analytical grade sodium or potassium salts of fluoride, chloride, acetate, nitrate, bromide, iodide, perchlorate, thiocyanate and sulphate were supplied by Sigma Aldrich. Milli-Q-purified distilled water was used. All chemicals were used as supplied without further purification.
IR spectra were taken using an FT-IR (ATR module) spectrometer (Perkin Elmer Spectrum 65). Thermogravimetric analysis (TGA) was conducted using a Shimadzu DTG-60 instrument. NMR spectra were obtained using a Bruker 400 MHz (Ultrashield). Ion Selective Electrode (ISE) measurements were carried out using a double-junction Ag/AgCl/3 M KCl/1 M LiOAc as a reference electrode (Thermo Scientific Orion 900200 Sure-Flow D/J). The polymer membrane ISEs were fabricated as indicated below. Electrochemical measurements were performed at ambient temperature using a potentiometer (Jenway 3510).

### Synthesis

### 1-propargyl-3-methylimidazolium chloride (1).

A 50 ml round bottomed flask placed in an ice bath was purged with dry nitrogen for 5 minutes and then sealed. 1-Methyl imidazole (1.5 g, 0.0182 mol) was added and left to cool for 3 minutes. Propargyl chloride (1.5 g, 0.020 mol) was added slowly using a syringe. The mixture was stirred magnetically for 10 minutes at 0 °C. The mixture is heated to 70 °C for 10 minutes and then, following removal of the heat source, the mixture is allowed to stir at ambient temperature overnight. The mixture is placed on a rotary evaporator for 20 minutes at 80 °C to remove unreacted starting material. The product was used with no further purification. 2.7 g of a dark brown viscous liquid was obtained representing a yield of 94 %. νₘₐₓ (FT-IR-ATR)/cm⁻¹ 3380, 3141, 3076, 2936, 2117, 1566, 1162, 748, 621. δ_{H}(400 MHz; MeOD; Me_{4.}Si) 9.13 (1H, s, NC*H*N), 7.73 (1H, m, N⁺C*H*CHN), 7.66 (1H, m, N⁺CHC*H*N), 5.19 (2H, s, N⁺C*H*₂C), 3.97 (3H, s, NC*H₃*), 3.33 (1H, m, CH₂CC*H*). ¹³C(50MHz, MeOD): 138.9, 125.3, 123.4, 78.9, 75.7, 40.0, 36.8 ppm.

### 1-propargyl-3-butylimidazolium chloride (2).

An identical procedure as that for the synthesis of 1-propargyl-3-methylimidazolium chloride was used with the following proportions of starting materials: 1-butyl imidazole (2.25 g, 0.018 mol) was reacted with propargyl chloride (1.5 g, 0.02 mol). 3.4 g of a dark brown viscous liquid was obtained representing a yield of 95 %. νₘₐₓ (FT-IR-ATR)/cm⁻¹ 3389, 3079, 2956, 2933, 2870, 2118, 1564, 1454, 1158, 750, 618. δ_{H}(400 MHz; CD₃CN; Me₄Si) 9.89 (1H, s, NC*H*N), 7.71 (1H, m, N⁺C*H*CHN), 7.65 (1H, m, N⁺CHC*H*N), 5.33 (2H, s, N⁺C*H*₂C), 4.27 (2H, t, NC*H*₂CH₂), 3.22 (1H, m, CH₂CC*H*), 1.86 (2H, m, CH₂*CH*₂CH₂), 1.34 (2H, m, CH₂*CH*₂CH₃), 0.94 (3H, s, NC*H*₃). ¹³C(50MHz, CD₃CN): 136.2, 122.3, 121.7, 76.8, 74.7, 48.9, 38.4, 31.2, 18.6, 12.3 ppm.

### Azide functionalised PVC (PVC-azide).

The preparation of PVC-azide was based on a method previously reported by Pawlak and co-workers.^{[1]} PVC (5.0 g), sodium azide (5.2 g, 0.08 mol) and 210 ml of a DMF/water (5:1 v/v) mixture were added to a 250 ml round bottomed flask. The flask was slowly purged with dry nitrogen for 5 minutes. The stirring mixture is heated to 50 °C under nitrogen. After 5, 24, 48, 70, 117 and 163 hours, 30 ml aliquots of reaction mixture are removed from the reaction vessel and allowed to cool to room temperature. The solid is filtered out under vacuum and 3 times alternately washed with 20 ml de-ionised water and 20 ml methanol. The resulting white solid was dried in an oven at 60 °C for 2 hours resulting in 4.2 g of product. Subsequent repeat reactions were terminated after 48 hours. νₘₐₓ (FT-IR-ATR)/cm⁻¹ 2966, 2909, 2108, 1426, 1253,957,607.

### Immobilising Ionic Liquids on PVC.

PVC-1: into a 250 ml volumetric flask were added 1 (0.76 g, 4.9×10⁻³ mol), PVC-azide (0.97 g), copper sulphate pentahydrate (0.44 g, 1.76×10⁻³ mol) and ascorbic acid (1.5 g, 8.5×10⁻³ mol) in 83 ml of a THF/water mixture (6:1 v/v). The solution is stirred at room temperature for 4 hours. De-ionised water was added to precipitate out a solid. The solid is filtered out under vacuum and washed 5 times with 10 ml de-ionised water. The resulting solid was dried in an oven at 60 °C for 3 hours. The solid was then dissolved in 30 ml THF and any insoluble solids removed by vacuum filtration. The filtrate was treated with de-ionised water to precipitate out the solid product. The solid was recovered by vacuum filtration and washed 3 times with 10 ml de-ionised water. The resulting solid was dried in an oven at 60 °C for 3 hours. 0.65 g of a fibrous white solid was recovered. νₘₐₓ (FT-IR-ATR)/cm⁻¹ 2971, 2909, 2110, 1426, 1252, 964, 612. Anal. found: C, 37.88; N, 0.67.
**PVC-2:** An otherwise identical procedure as that for the synthesis of PVC-**1** was used with the following starting materials: **2** (1.12g, 5.6×10⁻³ mol) was reacted with PVC-azide (1.30g). 0.99 g of a fibrous white solid was recovered. νₘₐₓ (FT-IR-ATR)/cm⁻¹ 2969, 2917, 2108, 1424, 1249, 969, 689. Anal. found: C, 38.27; N, 0.61.

### Membrane preparation and polymer ISE fabrication

ISE membrane cocktails were generally prepared in THF containing PVC-**1** or PVC-**2** (34 %w/w) and NPOE (66 %w/w). Silver-silver chloride (Ag/AgCl) wire was prepared by immersing clean Ag wire in 5 % w/v sodium hypochlorite for 10 minutes followed by rinsing in de-ionised water. For ISE fabrication, a short length of Ag/AgCl was inserted into the tapered end of a micropipette tip (1 ml blue/disposable) and glued to a length of copper wire inside the pipette tip leading to the potentiometer connectors using silver loaded epoxy adhesive (RS 186-3616). The tapered pipette tip end was sealed in a water tight fashion around the inserted wire using standard two part epoxy resin (Araldite). The exposed Ag/AgCl wire (around 6 mm) was now repeatedly dip coated with membrane cocktail to build up a bead completely covering the wire. THF was allowed to evaporate between coats.
Figure 1 shows an embodiment of a fabricated ISE combining a disposable pipette tip with copper wire and Ag/AgCl wire at the tip. :Figure 2 shows coating of the fabricated ISE with the PVC-**1** or PVC-**2** based cocktail. :

### Electrochemical measurements

ISEs were conditioned in 0.01 M NaCl overnight and in de-ionised water for 30 minutes prior to first use. A titrations sequence following the Hofmeister series was followed with the least lipophilic anions tested first. ISE titrations were carried out in the range log a = -7 to -1 for each anion tested. Observed potentials were recorded once stabilised and the time noted. Electrodes were stored in 0.01 M NaCl following first use.
Selectivity coefficients were calculated using the Separate Solutions Method (SSM).^{[2]} Activity coefficients (log a) were calculated according to the Debye-Hückel approach and voltages were corrected for liquid-junction potentials with the Henderson equation.

### Analytical Results

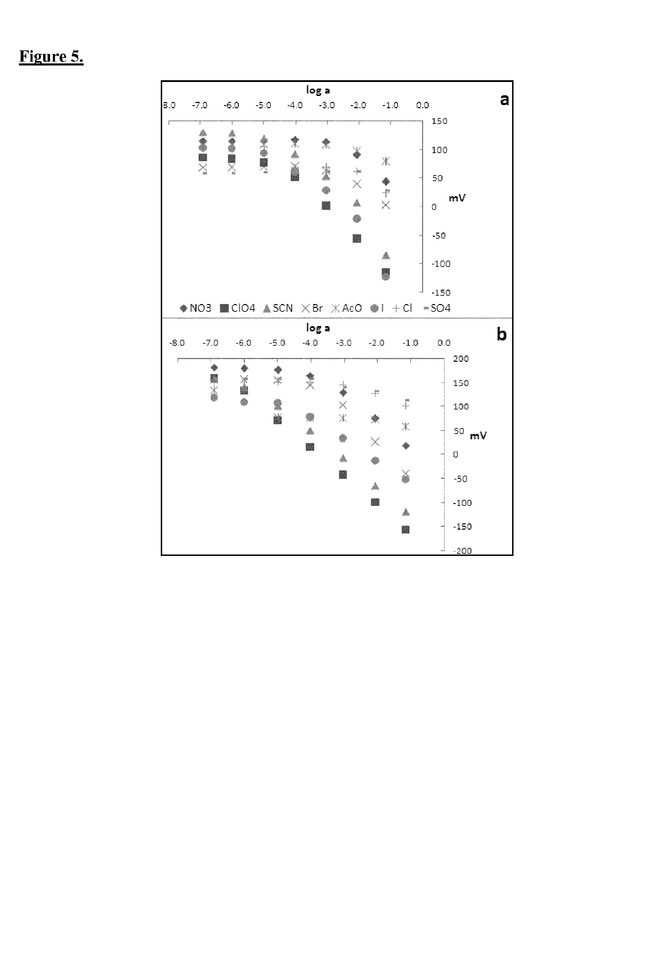

Ion Selective Electrode (ISE) polymer membrane cocktails of PVC-**1** and PVC-**2** were prepared with NPOE used as plasticizer and THF as solvent. From these cocktails, Coated Wire Electrodes (CWEs) based on Ag/AgCl substrate wire were prepared. Figure 5 shows the response of PVC-1 and PVC-**2** based ISEs to a series of anions in water, and shows that for both electrodes, response to perchlorate dominates with strong responses to iodide and thiocyanate present also. In addition to this, the response ranges for PVC-**2** based ISEs are in general broader with linear response range starting at log a = -7 for perchlorate. The hybrid compounds of the invention (PVC-**1** and PVC-**2**) based ISEs acts as ion exchanger (anions clearly can interact with the membranes) and ionophore as shown by broad response ranges and selectivity deviating from the Hofmeister series. Furthermore, several responses are Nernstian, indicative of a correctly functioning electrode. In fact the absence of Super-Nernstian responses at low activities of perchlorate and thiocyanate for PVC-**2** mirror the behaviour of ISEs where the ionophore is covalently attached to the polymer backbone.^{[3]} The resultant absence or reduction of zero-current ion fluxes due to immobilisation of the ionophore are known to quell such (undesirable) Super-Nernstian behaviour.
Furthermore, the observed detection limits of log a = -7 in the case of PVC-**2** also shows another desirable property of correctly functioning solid contact ISEs, namely the absence of zero-current primary ion fluxes from inner filling solutions (eliminated here) to the sample-membrane interface, which generally precludes observing responses to ions below about log a = -6 in classical ISE designs that have been conditioned in primary ion solutions (sample concentrations lower than this are masked by ions that emerge at the membrane sample interface stemming from inner filling solution).^{[4]} No additional ionophore or ion exchange salts were added in our experiments thus simplifying the membrane make-up.

The invention is not limited to the embodiments hereinbefore described which may be varied in construction and detail without departing from the spirit of the invention.

### References

[1] M. Pawlak, E. Grygolowicz-Pawlak, E. Bakker, Analytical Chemistry 2010, 82, 6887-6894.
[2] E. Bakker, E. Pretsch, P. Buhlmann, Analytical Chemistry 2000, 72, 1127-1133.
[3] A. Radu, S. Peper, E. Bakker, D. Diamond, Electroanalysis 2007, 19, 144-154.
[4] E. Bakker, P. Buhlmann, E. Pretsch, Chemical Reviews 1997, 97, 3083-3132.

## Claims

1. A hybrid compound formed by reaction between (a) an imidazolium-based ionic liquid functionalised with an alkyne group and (b) a polymer backbone comprising a plurality of azide functional groups, via an azide-alkyne cycloaddition reaction, in which the hybrid compound comprises a synthetic polymer backbone comprising at least one functional group X of general formula (I): 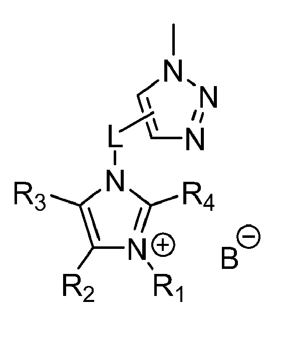 in which:
R₁ to R₄ are each, independently, any chemical group, selected from H, halogen, a substituted or unsubstituted, branched or unbranched alkyl, alkenyl, cycloalkyl, aryl, acyl, heteroaryl, arylalkyl, heteroarylalkyl, aryloxy, alkyloxy, arylalkyloxy, aromatic polycycles, non-aromatic polycycles, mixed aryl and non-aryl polycycles, polyheteroaryl, non-aromatic polyheterocycles, mixed aryl and non-aryl polyheterocycles, and a pyridine group
L is a linker; and
B is an anion.

2. A hybrid compound according to Claim 1 and having the general formula (II): 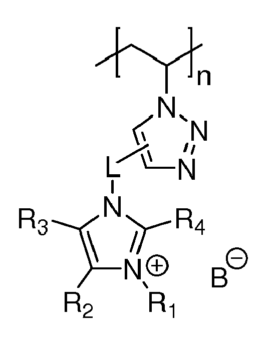 in which n is a whole number greater than 1.

3. A hybrid compound according to Claim 1 and having the general formula (III) below: 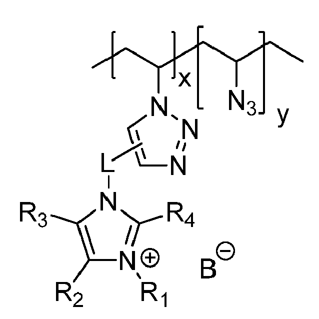 in which x and y are each, independently, a whole number of at least 1.

4. A hybrid compound according to Claim 1 and having the general formula (IV) below: 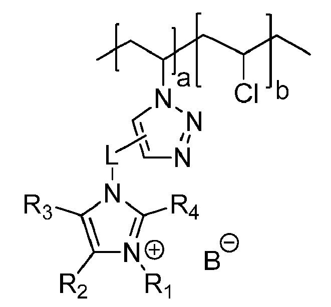 in which a and b are each, independently, a whole number of at least 1.

5. 4. A hybrid compound according to Claim 1 and having the general formula (V) below: 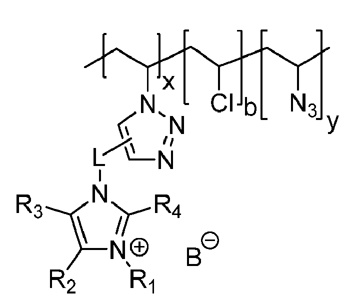 in which x, b and y are each, independently, a whole number of at least 1.

6. A hybrid compound of any preceding Claim in which R₁ is a C₁-C₁₂ alkyl.

7. A hybrid compound of any preceding Claim in which R₂ to R₄ are H.

8. A hybrid compound as claimed in any preceding Claim in which B is a chloride anion.

9. A method for making a hybrid compound comprising the steps of reacting an ionic liquid of general formula (VII): 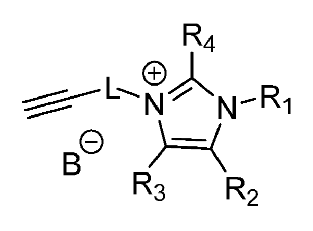 with an azidated polymer in a copper catalysed azide-alkyne cycloaddition reaction, and in which:
R₁ to R₄ are each, independently, any chemical group, selected from H, halogen, a substituted or unsubstituted, branched or unbranched alkyl, alkenyl, cycloalkyl, aryl, acyl, heteroaryl, arylalkyl, heteroarylalkyl, aryloxy, alkyloxy, arylalkyloxy, aromatic polycycles, non-aromatic polycycles, mixed aryl and non-aryl polycycles, polyheteroaryl, non-aromatic polyheterocycles, mixed aryl and non-aryl polyheterocycles, and a pyridine group
L is a linker; and
B is an anion.

10. A method according to Claim 9 in which the azidated polymer has a general formula selected from: 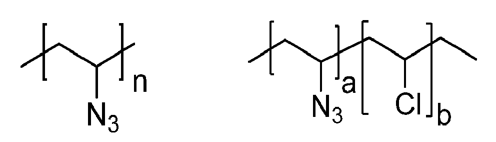 in which n, a and b are each, independently, are at least 1.

11. A method according to Claim 9 or 10 in which the ionic liquid of general formula (VII) is formed by reaction between a compound of general formula (VIII) 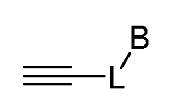 with a compound of general formula (IX)

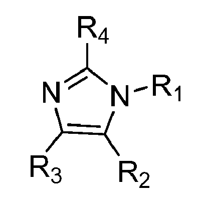

12. A method according to ant of Claims 9 to 11 in which R₁ is a C₁-C₁₂ alkyl.

13. A method according to ant of Claims 9 to 12 in which R₂ to R₄ are H.

14. A method according to ant of Claims 9 to 13 in which B is a chloride anion.

15. An ion selective electrode (ISE) sensor of the type comprising an ion selective electrode and a reference electrode, wherein the ion selective electrode comprises a coating comprising a hybrid compound of any of Claims 1 to 8.
